# EUROPEAN PATENT APPLICATION

(11) **EP 3 440 940 A1**
(43) Date of publication of application: **13.02.2019**
(21) Application number: 17425089.4
(22) Date of filing: 11.08.2017
(51) Int. Cl.: A21C 11/00

(54) **MACHINE FOR ROLLING OUT DOUGH**

(71) Applicant: Compagni, Nunzio, 41043 Formigine (MO) (IT)
(72) Inventor: Compagni, Nunzio, 41043 Formigine (MO) (IT)
(74) Representative: Zoli, Filippo

(57) **Abstract**

A machine (1) for rolling out dough, comprising: a bearing frame (2), at least a supporting surface (3) of at least one portion of dough (P) to be rolled out; dough roll out means (4) associated with the frame (2), arranged on top of the supporting surface (3), movable in translation along a direction of approaching/moving away (5) from the supporting surface itself and in rotation around a substantially vertical first axis (A), wherein the roll out means (4) comprise at least a first and a second roll out element (6, 7) separate from one another and associated integrally in rotation around the first axis (A) and wherein the first roll out element (6) is movable in rotation around a substantially vertical second axis (B) and separate from the first axis (A).

## Description

The present invention relates to a machine for rolling out dough.

Known type of machines used in the food industry for rolling out dough, and in particular for making pizzas and the like, generally comprise a bearing frame, a supporting surface for a portion of dough to roll out, and means for rolling out dough arranged on top of the supporting surface, where one of the means for rolling out dough and the supporting surface is movable with respect to the other in the direction of mutual approaching/moving away to press the dough positioned between them.

The portion of dough resting on the supporting surface is therefore pressed between the supporting surface and the roll out means, the latter being heated. Such pressing, together with the heat emitted by the supporting surface and/or by the roll out means, causes a reduction in the thickness of the portion of dough and an increase in its diameter.

This known type of machine does have several drawbacks.

In particular, following the pressure due to the mutual approach of the supporting surface and the roll out means, the dough is not rolled out evenly and therefore has an irregular contour and a variable texture.

In fact, the texture taken by the dough due to its pressure varies according to the conformation and shape of the dough portion to be rolled out positioned on the supporting surface. Indeed, if the dough portion to be rolled out is irregular and therefore has an uneven distribution of the material, due to pressure the dough thus rolled out will have variations in density locally which will inevitably affect the organoleptic properties of the finished product.

In addition, the heat emitted by the supporting surface and/or by the roll out means results in a partial cooking of the dough, thereby jeopardizing the quality of the finished product.

Another known type of machine for rolling out dough is the so-called "roller machine".

More in detail, the roller machine rolls out the dough by lamination, i.e. by means of two opposing and counter-rotating rollers that achieve a decrease in dough thickness.

By adjusting therefore the distance between the roller axes, it is possible to define the desired dough thickness.

Nevertheless, this type of machine for rolling out dough also has some drawbacks.

In fact, the passage of the dough through the rollers does not allow for obtaining a substantially circular conformation, so further processing is required to give the dough the desired shape.

Alternatively, the dough has to be manually rotated during its passage through the rollers so that the rolling out takes place in several directions. As can be easily appreciated, this step is very difficult and depends considerably, in any case, on the abilities of the operator in charge.

Yet another type envisages the presence of a bearing frame, a supporting surface on which the dough to be rolled out is positioned, and roll out means for rolling out dough that are movable close to/away from the supporting surface. More particularly, the roll out means comprise a plurality of rollers movable in rotation around respective axes and are movable integrally to one another around a vertical axis of rotation.

Even this known typology has some drawbacks since it does not allow for an even rolling out of the dough.

In particular, the central portion of the dough undergoes a less intense pressure action than the peripheral portions and thus has different density and flatness from these.

The main aim of the present invention is to provide a machine which allows obtaining even rolling out of dough in all its areas.

Within this aim, one object of the present invention is to provide a machine which allows adjusting the pressure applied on the dough according to its thickness.

Another object of the present invention is to provide a machine for rolling out dough which allows to overcome the aforementioned drawbacks of the prior art within the ambit of a simple, rational, easy, efficient to use and cost-effective solution.

The aforementioned objects are achieved by the present machine for rolling out dough according to claim 1.

Other characteristics and advantages of the present invention will become more evident from the description of a preferred, but not exclusive, embodiment of a machine for rolling out dough, illustrated by way of an indicative, but nonlimiting example, in the attached drawings in which:

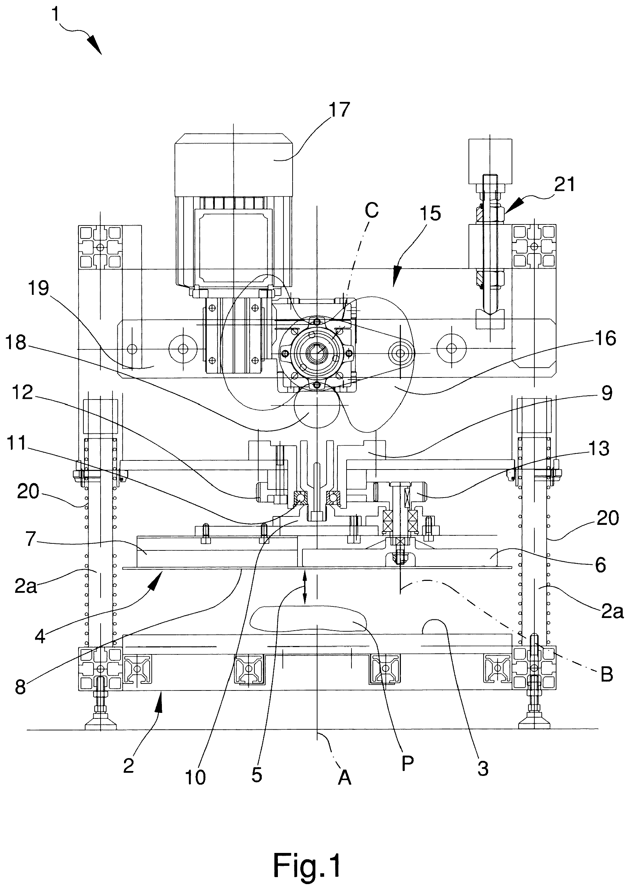

Figure 1 is a first sectional view of a machine according to the invention;

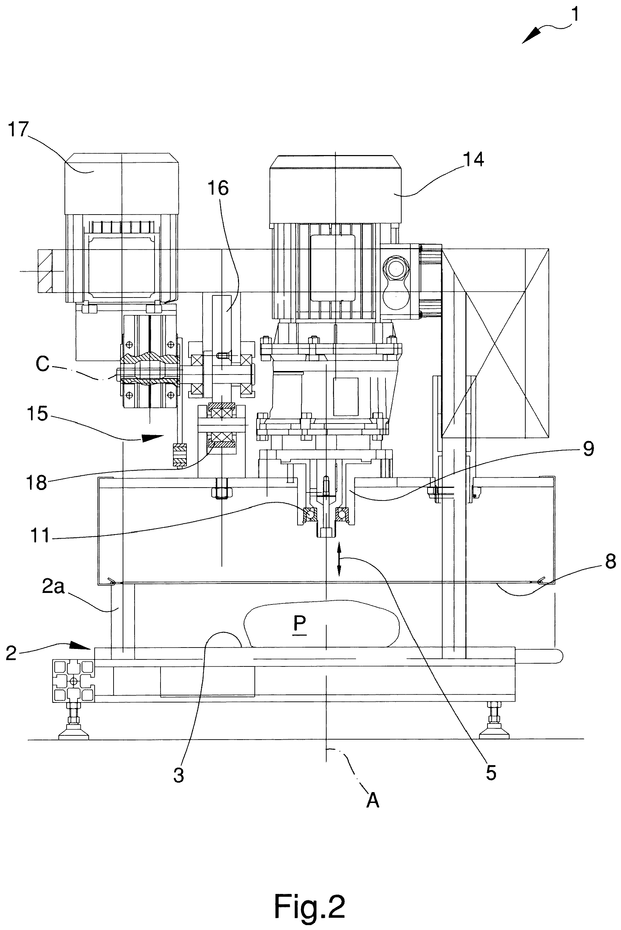

Figure 2 is a second sectional view of the machine of Figure 1, devoid of the dough roll out means;
Figure 3 is a top plan view of the dough roll out means of the machine of Figure 1.

With particular reference to these illustrations, reference numeral 1 globally indicates a machine for rolling out dough.

The machine 1 comprises a bearing frame 2, at least one supporting surface 3 of at least one portion of dough P to be rolled out, dough roll out means 4 associated with the frame 2 and arranged on top of the supporting surface 3. The roll out means 4 are movable in translation along a direction of approaching/moving away from the supporting surface 3, identified in the figures with the double arrow 5, and are movable in rotation around a substantially vertical first axis A.

According to the invention, the roll out means 4 comprise at least a first and a second roll out element, respectively 6 and 7, separate from one another and associated integrally in rotation around said first axis A.

Always according to the invention, the first roll out element 6 is also movable in rotation around a substantially vertical second axis B and separate from the first axis A.

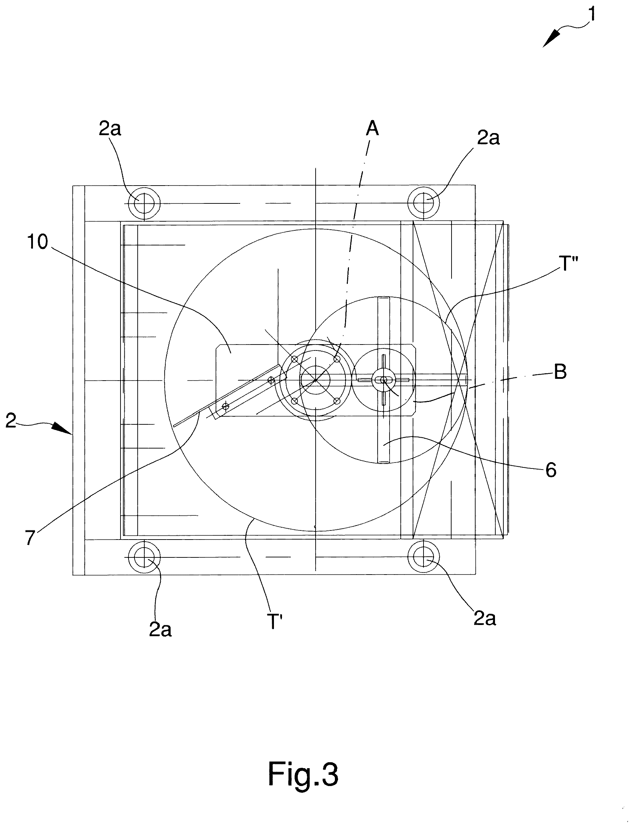

The first and second roll out element 6 and 7 each performs a relevant first trajectory T' which is circular around the first axis A and the first roll out element 6 also runs a second trajectory T" which is circular around the second axis B. As can be seen from Figure 3, the first trajectory T' defined by the first and second roll out element 6 and 7 in their rotation around the first axis A is substantially the same, and the second trajectory T" defined by the first roll out element 6 in its rotation around the second axis B is contained within the first and tangent to it. The first roll out element 6, due to its rotation around the second axis B, pushes the dough being within the second trajectory T" towards the outside of same, so that it is then intercepted by the second roll out element 7 in its rotation around the first axis A. The combined action of the first and second roll out element 6 and 7 thus allows rolling out the portion of dough P evenly.

More particularly, the second axis B is arranged on the opposite side to the second roll out element 7 with respect to a reference plane passing through the first axis.

Advantageously, the first roll out element 6 extends through the aforementioned reference plane. More in detail, the first roll out element 6, during its rotation around the second axis B, passes through the first axis A, which then falls within the second trajectory T". This allows the processing and rolling out of the central portion of the dough, that is, of the portion positioned in the proximity of the first axis A.

In the preferred embodiment shown in the figures, the first roll out element 6 is substantially cross-shaped. Alternative embodiments cannot however be ruled out wherein the first roll out element 6 has a different conformation.

The machine 1 further comprises at least one non-stick element 8 of the flexible type, which is positioned in contact with the roll out elements 6 and 7 and is interposed between the roll out elements themselves and the supporting surface 3. The non-stick element 8 is adapted to contact the portion of dough P as a result of the roll out elements 6, 7 being approached to the supporting surface itself.

Preferably, the non-stick element 8 comprises a first flexible layer, positioned substantially in contact with the roll out elements 6 and 7, and a second layer, also flexible and of lower texture than the first layer, associated with the first layer and facing towards the supporting surface 3.

The non-stick element 8, and in particular its second layer, is of the porous type, so as to also retain a certain amount of flour deposited onto it. The non-stick element 8 can, e.g., be made of silicone, although different embodiments cannot be ruled out which provide for the use of other types of material.

Suitably, the machine 1 comprises a supporting body 9, 10 of the roll out elements 6 and 7 which is movable along the direction of approaching/moving away from the supporting surface 3.

More particularly, the supporting body 9, 10 comprises a first body 9, which is associated movable in translation with the frame 2 along the direction 5, and a second body 10, which is integral in translation with the first body 9 approaching/moving away from the supporting surface 3 and which is movable in rotation with respect to the first body itself around the first axis A. The second body 10 supports the roll out elements 6 and 7, entraining them in rotation around the first axis A. Between the first and second body 9 and 10 is interposed at least a radial bearing 11.

The first roll out element 6 is therefore associated movable in rotation with the second body 10 around the second axis B, while the second roll out element 7 is blocked in rotation with respect to the second body itself.

Preferably, the first body 9 comprises a first toothed wheel 12, which is therefore fixed, and the second roll out element 7 comprises a second toothed wheel 13 which engages with the first wheel 12 and which, due to the rotation of the first roll out element 6 around the first axis A causes the first roll out element itself to rotate around the second axis B.

More in detail, the machine 1 comprises first motor means 14, associated with the frame 2, adapted to operate in rotation the second body 10 around the first axis A.

Suitably, the machine 1 comprises movement means 15 for moving the supporting body 9,10, and in particular the first body 9, along the direction of approaching/moving away 5. The supporting body 9,10 has an idle position, which corresponds to the position at which it is located at the maximum distance from the supporting surface 3, and a final position, which corresponds to the position at which it is located at the minimum distance from the supporting surface 3.

In the preferred embodiment shown in the figures, the movement means 15 comprise at least one cam element 16 connected to the frame 2, which is operable in rotation around a substantially horizontal third axis C and is adapted to interact with the first body 9 to displace it along the direction of approaching/moving away 5.

Suitably, the machine 1 comprises second motor means 17, associated with the frame 2, adapted to operate in rotation the cam element 16 around the third axis C.

In the embodiment shown in the figures, the cam element 16 interacts with the first body 9 by means of a ball-shaped element 18.

The cam element 16 is also connected to the frame 2 by means of a supporting bracket 19.

More particularly, the cam element 16 is shaped so as to command a first and a second consecutive travel stroke of the supporting body 9,10 approaching the supporting surface 3, due to a first and second rotation respectively, around the third axis C.

The amount of displacement of the supporting body 9,10, and particularly of the first body 9, during the first travel stroke is greater than the displacement during the second travel stroke, the rotation angle of the cam element 16 being equal. This displacement difference is related to the variation in the density of the portion of dough P during its processing. More particularly, during the first travel stroke, the portion of dough P, still having to be processed, has lower texture than the one it features when the supporting body 9,10 runs the second travel and therefore offers low resistance to displacement, thus allowing the supporting body itself to run for a greater stroke.

Advantageously, the cam element 16 is shaped so as to command a forward travel and a return travel of the supporting body 9,10 at each rotation substantially equal to 180°. By the terms "forward travel" and "return travel" are meant the displacements of the supporting body 9,10, respectively approaching and moving away from the supporting surface 3, that is from the idle position to the final position and vice versa.

At each complete revolution around the third axis C of the cam element 16 the machine 1 is therefore able to roll out two portions of dough P.

Preferably, elastic means 20 are provided which are associated with the frame 2 and are adapted to counteract the displacement of the supporting body 9,10 approaching the supporting surface 3.

More particularly, the frame 2 comprises a plurality of bearing posts 2a, with which the first body 9 is associated in a sliding manner, and on which are fitted the elastic means 20, of the type of springs, arranged below the first body itself. The elastic means 20 perform the function of keeping the first body 9, and more particularly the ball-shaped element 18, in contact with the cam element 16. Advantageously, the machine 1 also comprises adjusting means 21 for adjusting the position of the cam element 16 with respect to the supporting surface 3. Since the travel of the supporting body 9,10 remains the same regardless of the starting position of the cam element 16, by intervening on the adjusting means 21, the final position of the supporting body 9,10 is changed, i.e. the minimum distance of the roll out elements 6 and 7 from the supporting surface 3 and, consequently, the final thickness of the portion of dough P.

More in detail, the adjusting means 21, e.g. of the type of one or more adjusting screws, are adapted to vary the position of the bracket 19 with respect to the frame 2.

Alternative embodiments cannot however be ruled out of the movement means 15 of the type known to the expert in the field, such as e.g. one or more fluid-operated jacks kinematically connected to the first body 9 to command the displacement thereof along the direction of approaching/moving away 5.

The operation of the present invention is as follows.

When the supporting body 9,10 is in the idle position, or is located at the maximum distance from the supporting surface 3, an operator places the portion of dough P to be rolled out on the supporting surface itself, after which he/she operates the motor means 14 and 17.

While the first motor means 14 bring the second body 10 in rotation around the first axis A, thus causing the rotation of the first roll out element 6 around the second axis B, the second motor means 17 move the cam element 16 in rotation around the third axis C.

More particularly, the rotation of the cam element 16 causes the downward displacement of the first body 9, and consequently also of the second body 10. It follows therefore that the roll out means 4 exert a double action on the portion of dough P, i.e. a compression action due to the downward displacement of the first body 9, and a horizontal rolling out action due to the rotation of the second body 10 around the first axis A.

As mentioned above, the rotation of the second body 10 around the first axis A causes the first and second roll out elements 6 and 7 to rotate around such axis and the rotation at the same time of the first roll out element 6 around the second axis B.

This way, the first roll out element 6, due to its rotation around the second axis B, rolls out the portion of dough P on which it acts, by pushing it outwardly of the second trajectory T" and, therefore, inside the operating area of the second roll out element 7, thus completing the flattening action.

The first roll out element 6, also covering the central portion of the first trajectory T', causes all the areas of the portion of dough P to be subjected to the same mechanical action, so as to obtain an even rolling of the portion of dough itself.

As mentioned above, due to the particular conformation of the cam element 16, the first body 9 runs a first travel stroke, due to which, starting from the idle position, it approaches the supporting surface 3 thus considerably reducing the thickness of the portion of dough P. As a result of this first travel stroke, during which the second body 10 rotates around the first axis A so that the roll out elements 6, 7 perform the flattening action of the portion of dough P, the latter gradually increases its compactness, thus providing greater resistance against the further advancement of the first body 9. For this reason, the second travel stroke performed by the latter due to the rotation of the cam element 16 has lower extension than the first stroke.

At the end of the second travel stroke, due to the further rotation of the cam element 16, the supporting body 9,10 reverses its stroke and goes back to the idle position.

It has in practice been found that the described invention achieves the intended objects and in particular it is emphasized that the combined action of the first and second roll out element allows for an even and uniform flattening of the dough thus processed.

In particular, the simultaneous rotation of the first roll out element around the first and second axis and of the second roll out element around the first axis allows rolling efficiently every dough area, including the one positioned at the first axis itself.

## Claims

1. Machine (1) for rolling out dough, comprising:
- a bearing frame (2);
- at least a supporting surface (3) of at least one portion of dough (P) to be rolled out;
- dough roll out means (4) associated with said frame (2), arranged on top of said supporting surface (3), movable in translation along a direction of approaching/moving away (5) from the supporting surface itself and in rotation around a substantially vertical first axis (A),
and **characterized by** the fact that said roll out means (4) comprise at least a first and a second roll out element (6, 7) separate from one another and associated integrally in rotation around said first axis (A) and by the fact that said first roll out element (6) is movable in rotation around a substantially vertical second axis (B) and separate from said first axis (A).

2. Machine (1) according to claim 1, **characterized by** the fact that said second axis (B) is arranged on the opposite side to said second roll out element (7) with respect to a reference plane passing through said first axis (A).

3. Machine (1) according to claim 1 or 2, **characterized by** the fact that said first roll out element (6) extends, in its rotation around said second axis (B), through said reference plane.

4. Machine (1) according to one or more of the preceding claims, **characterized by** the fact that said first roll out element (6) is substantially cross-shaped.

5. Machine (1) according to one or more of the preceding claims, **characterized by** the fact that said first and second roll out elements (6, 7) define a relative first trajectory (T') which is circular due to their rotation around said first axis (A) and that said first roll out element (6) also defines a second trajectory (T") which is circular due to its rotation around said second axis (B).

6. Machine (1) according to claim 5, **characterized by** the fact that the first trajectories (T') defined by said roll out elements (6, 7) are coincident and that said second trajectory (T") is positioned inside said first trajectories (T').

7. Machine (1) according to one or more of the preceding claims, **characterized by** the fact of comprising a supporting body (9, 10) of said roll out elements (6, 7) which is movable along said direction of approaching/moving away (5).

8. Machine (1) according to claim 7, **characterized by** the fact that said supporting body (9, 10) comprises at least a first body (9), which is associated movable in translation with said frame (2) and at least a second body (10) associated in a revolving manner with said first body (9) around said first axis (A), which is integral in translation with the first body itself and supporting said roll out elements (6, 7), said first roll out element (6) being associated movable in rotation with said second body (10) around said second axis (B).

9. Machine (1) according to claim 8, **characterized by** the fact that said first body (9) comprises a first toothed wheel (12) and by the fact that said first roll out element (6) comprises at least a second toothed wheel (13) which engages with said first wheel (12) to bring the first roll out element itself in rotation around said second axis (B) due to its rotation around said first axis (A).

10. Machine (1) according to one or more of the preceding claims, **characterized by** the fact of comprising movement means (15) for moving said supporting body (9, 10) along said direction of approaching/moving away (5).

11. Machine (1) according to claim 10, **characterized by** the fact that said movement means (15) comprise at least one cam element (16) connected to said frame (2), which is operable in rotation around a substantially horizontal third axis (C) and adapted to interact with said first body (9) to displace it along said direction of approaching/moving away (5).

12. Machine (1) according to claim 11, **characterized by** the fact that said cam element (16) is shaped so as to command a first and a second consecutive travel stroke of said supporting body (9,10) approaching said supporting surface (3), as a result of a first and a second rotation respectively, around said third axis (C) where the displacement of said supporting body (9,10) during said first stroke is greater than the displacement during said second stroke, the rotation angle of said cam element (16) being equal.

13. Machine (1) according to claim 11 or 12, **characterized by** the fact that said cam element (16) is shaped so as to command a forward travel and a return travel, approaching and moving away respectively, from said supporting surface (3), of said supporting body (9,10) at each rotation substantially equal to 180°.

14. Machine (1) according to one or more of the preceding claims, **characterized by** the fact of comprising elastic means (20) which are associated with said frame (2) and adapted to counteract the displacement of said supporting body (9,10) approaching said supporting surface (3).

15. Machine (1) according to one or more of the preceding claims, **characterized by** the fact of comprising adjusting means (21) for adjusting the position of said cam element (16) with respect to said supporting surface (3).
